# EUROPÄISCHE PATENTSCHRIFT

(11) **EP 1 496 534 B1**
(45) Veröffentlichungstag und Bekanntmachung des Hinweises auf die Patenterteilung: **30.08.2006**
(21) Anmeldenummer: 03405527.7
(22) Anmeldetag: 11.07.2003
(51) Int. Cl.: H01H 33/00, H01H 9/52, H02B 1/56

(54) **Hochleistungsschalter mit Kühlrippenanordnung**
High power circuit breaker with heat sink rib assembly
Disjoncteur à haute puissance avec assemblage d'ailettes de refroidissement

(43) Veröffentlichungstag der Anmeldung: 12.01.2005
(73) Patentinhaber: ABB RESEARCH LTD., 8050 Zürich (CH)
(72) Erfinder: Pleines, Marianne, 8404 Winterthur (CH); Mauroux, Jean-Claude, 5502 Hunzenschwil (CH); Lakner, Martin, 5413 Birmenstorf (CH); Schoenemann, Thomas, 5426 Lengnau (CH)
(74) Vertreter: ABB Patent Attorneys

(56) Entgegenhaltungen:
- DE-A- 2 707 205
- US-A- 3 761 599
- PATENT ABSTRACTS OF JAPAN vol. 016, no. 352 (E-1241), 29. Juli 1992 (1992-07-29) & JP 04 109524 A (TOSHIBA CORP), 10. April 1992 (1992-04-10)

## Beschreibung

### Technisches Gebiet

Die Erfindung bezieht sich auf das Gebiet der Hochleistungsschaltertechnik. Sie bezieht sich auf einen Hochleistungsschalter gemäss dem Oberbegriff des Patentanspruchs 1.

### Stand der Technik

Derartige Hochleistungsschalter (Hochstrom- und/oder Hochspannungsschalter) wie Selbstblasschalter, gasisolierte Schaltanlagen, insbesondere Generatorschalter, sind seit Jahrzehnten bekannt und weisen zumeist für jede von drei elektrischen Phasen je einen Schalterpol auf, der gekapselt ist. Im Inneren eines solchen Schalterpoles befindet sich ein Innenleiter, welcher den zu unterbrechenden Strom führt. Entsprechende Nennstöme liegen typischerweise zwischen 6 kA und 40 kA bei Spannungenl kV bis 50 kV. Der Innenleiter ist umgeben von einem Aussenleiter, welcher die Kapselung für den Innenleiter bildet, so dass ausserhalb des Aussenleiters ein im wesentlichen feldfreier Raum ist. Der als Gehäuse ausgebildete Aussenleiter ist mit Erdpotential verbunden und führt einen dem Strom entgegengerichteten Rückstrom, welcher von der gleichen Grössenordnung ist wie der Strom des Innenleiters. Bei einem Hochleistungsschalter mit mehreren Schalterpolen sind die Aussenleiter der Schalterpole elektrisch miteinander verbunden.

Bei den genannten Strömen kommt es aufgrund von ohmschen Verlusten zu einer starken Erwärmung des zumeist rohrförmigen Innenleiters. Während des Nennstrombetriebes darf im Schalter eine durch Normen vorgegebene Höchsttemperatur, beispielsweise 105°C, und somit eine sich daraus ergebende maximale Temperaturerhöhung, beispielsweise 65°C, nicht überschritten werden, wodurch der maximale Nennstrom des Schaltgerätes limitiert ist. Darum werden solche Innenleiter oft mit Kühlkörpern versehen, wodurch der durch Konvektion abführbare Wärmeanteil vergrössert wird. Gegenüber dem Innenleiter ist der Aussenleiter als Wärmequelle weniger problematisch. Die ohmsche Erwärmung des Aussenleiters ist zwar vergleichbar mit der des Innenleiters, doch weist der Aussenleiter eine um ein Vielfaches grössere Oberfläche auf als der Innenleiter, so dass die durch Wärmestrahlung und durch Konvektion abführbare Wärme gross ist. Während am Innenleiter typischerweise 100°C bis 105°C vorliegen, weist der Aussenleiter Temperaturen von typischerweise 65°C bis 70°C auf. Hinzu kommt, dass der Aussenleiter nicht, wie der Innenleiter, von einem weiteren Gehäuse umgeben ist, so dass die Wärmeenergie des Aussenleiters sehr effizient über Wärmestrahlung in die Umgebung und durch Austausch mit der Aussenluft (Konvektion) abgegeben werden kann. Die Temperatur und die Temperaturerhöhung des Aussenleiters sind also deutlich geringer als die des Innenleiters.

Ein derartiges Schaltgerät hat den Nachteil, dass zur Erzielung eines hohen zulässigen Nennstroms des Schaltgerätes eine aufwendige Kühlanordnung an dem Innenleiter angebracht werden muss, damit die vorgegebene Höchsttemperatur nicht überschritten wird.

Aus der DE 27 97 205 A ist ein mit Kühlrippen versehenes Hochspannungsgerät bekannt, dessen gasdurchströmter Innenleiter in einer geerdeten Kapselung geführt wird. Am Ende des Innenleiters schliesst sich an die Kapselung ein zylinderförmiges Endstück an, auf dessen Mantelfläche die Kühlrippen nach aussen hin angeordnet sind. Die Kühlrippen sind somit nur lokal, also am zylindrisch geformten Endstück vorhanden und erstrecken sich nicht entlang der Kapselung und somit nicht entlang des Innenleiters.

Weiterhin ist in der US 3 761 599 ein in einem Stahltank befindlicher Leistungsschalter mit zwei isoliert in den Tank geführten elektrischen Durchführungen beschrieben. Der Tank ist zur Reduktion auftretender Wirbelströme und zur Ableitung von Wärme innen und aussen von mehreren schalenförmigen Mantelungen umgeben. Die äussere Mantelung des Tanks weist Kühlrippen auf, die sich sowohl zwischen Tank und Mantelung als auch nach aussen hin erstrecken.

### Darstellung der Erfindung

Es ist deshalb Aufgabe der Erfindung, einen Hochleistungsschalter der eingangs genannten Art zu schaffen, welcher die oben genannten Nachteile nicht aufweist. Insbesondere soll ein Schaltgerät für hohe Nennströme und Leistungen geschaffen werden, das eine vorgegebene Höchsttemperatur bei fliessendem Nennstrom nicht überschreitet und dennoch kompakt ist und nur einer moderat aufwendigen Kühlanordnung am Innenleiter bedarf.
Diese Aufgabe löst eine Vorrichtung und ein Verfahren mit den Merkmalen des Patentanspruches 1.

Der erfindungsgemässe Hochleistungsschalter mit mindestens einem Schalterpol zum Führen und Schalten eines im geschlossenen Schalterzustand in einer Stromflussrichtung fliessenden elektrischen Stromes, wobei der mindestens eine Schalterpol einen Innenleiter beinhaltet, welcher den Strom führt, und einen mit Erdpotential verbundenen Aussenleiter beinhaltet, welcher einen dem Strom entgegengerichteten Rückstrom führt, wobei der Aussenleiter als ein den Innenleiter umgebendes Gehäuse ausgebildet ist und an dem Aussenleiter eine Kühlrippen beinhaltende Kühlrippenanordnung vorhanden ist, kennzeichnet sich dadurch, dass die Kühlrippen beinhaltende Kühlrippenanordnung radial beabstandet zum Innenleiter angeordnet ist.

Anstatt Kühlrippen nur an dem heissen Innenleiter anzuordnen, werden erfindungsgemäss auch an dem per se gegenüber dem Innenleiter deutlich weniger heissen Aussenleiter Kühlrippen angeordnet. Dadurch wird die Effektivität der Innenleiter-Kühlung erhöht, ohne dass die Innenleiter-Kühlung selbst verändert werden müsste. Denn die Luft innerhalb des Aussenleiters (Gehäuses) kann ihre am Innenleiter aufgenommenen Wärme an das Gehäuse effektiver abgeben, da das Gehäuse wiederum seine Wärme mittels der Kühlrippenanordnung effektiver an die das Gehäuse umgebende Umgebungsluft abgeben kann. Bereits ohne den Einsatz einer besonders aufwendigen, beispielsweise aktiven Innenleiter-Kühlung können auf diese Weise sehr hohe Nennströme normkonform realisiert werden. Die Schalterpolkapselung (Gehäuse) und damit der Schalter kann dabei sehr kompakt bleiben. Eine Vergrösserung des Schalterinneren, welche auch zu einer effektiveren Wärmeabfuhr vom Innenleiter führte, ist nicht notwendig. Darum ist ein kompakter, geringe Aussenmasse aufweisender Schalter realisierbar.

Eine besonders vorteilhafte Ausführungsform des Erfindungsgegenstandes kennzeichnet sich dadurch, dass die Kühlrippenanordnung zumindest teilweise an einem solchen Teil des Gehäuses angeordnet ist, der verschieden ist von dem von dem Innenleiter minimal beabstandeten Teil des Gehäuses. Dadurch wird eine gute Kühlwirkung der Kühlrippen erzielt.

Der Gehäuseteil oder die Gehäuseteile, die den mininalen oder einen besonders geringen Abstand zum Innenleiter aufweisen, führen den grössten Teil des Rückstromes. Darum sind dort die ohmschen Verluste und auch die Erwärmung des Gehäuses maximal. Die weiter beabstandeten Teile des Gehäuses führen wenig oder sogar vernachlässigbar wenig Rückstrom, und erwärmen sich somit deutlich weniger. Zudem erwärmen sich die näher am Innenleiter angeordneten Teile des Gehäuses auch stärker aufgrund der durch den Innenleiter erwärmten Luft im Inneren des Gehäuses. Simulationsrechnungen haben aber ergeben, dass das Einbringen von Kühlrippen in einen stark vom Rückstrom durchflossenen Teil des Gehäuses zu einer Erhöhung der Verluste aufgrund der ungleichmässigen Stomverteilung im Aussenleiter führt, welche zu einer Erwärmung des Aussenleiters führt.

Das Gehäuse weist also zumindest einen Gehäuseteil auf, der von dem Innenleiter weiter beabstandet ist als ein anderer Teil des Gehäuses, wobei die Kühlrippenanordnung zum Teil oder vorteilhaft zur Gänze an einem solchen Gehäuseteil angeordnet ist. Dadurch wird eine effektivere Kühlung und somit ein höherer zulässiger Nennstrom erreicht. Vorteilhaft sind keine Kühlrippen an Teilen des Gehäuses angeordnet, die einen minimalen Abstand zum Innenleiter haben.

In einer bevorzugten Ausführungsform weist das Gehäuse einen Bodenteil, zwei Seitenteile und einen Deckel auf, wobei zumindest Teile des Deckels von dem Innenleiter weiter beabstandet sind als der Bodenteil und die Seitenteile, wobei die Kühlrippenanordnung an solchen Teilen des Deckels angeordnet ist. Der Deckel ist (bezüglich des Erdgravitationsfeldes) oben am Schalterpol angeordnet. Darum ergibt sich durch die Anordnung von Kühlrippen an dem Deckel eine bessere Kühlleistung der Kühlrippenanordnung, weil innerhalb des Gehäuses die erwärmte Luft nach oben steigt.

Mit grossem Vorteil weist die Kühlrippenanordnung sowohl ausserhalb des Gehäuses als auch innerhalb des Gehäuses Kühlrippen auf. Dies führt zu einer deutlichen Verbesserung der Kühlwirkung der Kühlrippenanordnung. Da mittels der Kühlrippenanordnung der Innenleiter indirekt über die Luft im Innern des Gehäuses gekühlt wird, ist ein guter, grossflächiger Wärmekontakt zwischen Kühlrippenanordnung und der Luft im Innern des Gehäuses sehr vorteilhaft. Dieser wird durch die Kühlrippen im Innern des Gehäuses erzeugt. Ein guter Wärmekontakt zur Aussenluft wird durch die äusseren Kühlrippen erzeugt.

Eine besonders effiziente Kühlwirkung wird erzielt, wenn die Kühlrippenanordnung eine mit dem Gehäuse verbundene Basisplatte aufweist, welche an einer, dem Inneren des Gehäuses zugewandten Seite innere Kühlrippen aufweist und an einer dem Inneren des Gehäuses abgewandten Seite äussere Kühlrippen aufweist. Besonders vorteilhaft sind die Kühlrippen senkrecht zu der Basisplatte erstreckt. Mit Vorteil ist die Basisplatte an ihren Rändern mit dem Gehäuse verbunden und in direktem thermischen Kontakt.

Besonders vorteilhaft sind weiterhin die inneren Kühlrippen parallel zu den äusseren Kühlrippen ausgerichtet und ausserdem die inneren Kühlrippen gegenüber den äusseren Kühlrippen versetzt angeordnet. Dies resultiert in einer verbesserten Herstellbarkeit, insbesondere wenn die Kühlrippen durch Strangpressen hergestellt werden. Die inneren und äusseren Kühlrippen können aber auch nicht gegeneinander versetzt angeordnet sein, also beispielsweise jeweils paarweise in einer Ebene angeordnet sein.

Weiteren Vorteil bringt es, wenn die inneren Kühlrippen weniger weit ins Innere des Gehäuses erstreckt sind als die die äusseren Kühlrippen von dem Gehäuse weg erstreckt sind. Auf diese Weise wird eine gute Kühlwirkung erzielt und gleichzeitig dielektrischen Anforderungen entsprochen, indem geringere Feldstärken in Gehäuse erreicht werden, weil die Kühlrippen zum Innenleiter einen grossen Abstand aufweisen können.

Bevorzugt sind die Kühlrippen flächig ausgebildet und senkrecht zur Stromflussrichtung ausgerichtet. Dadurch wird einerseits eine grosse Fläche für die Konvektion pro von der Kühlrippenanordnung eingenommenen Basisfläche wirksam und andererseits werden elektrische Verluste durch Wirbelströme und damit zusammenhängende Erwärmungen minimiert.

In einer bevorzugten Ausführungsform des Erfindungsgegenstandes umfasst die Kühlrippenanordnung mehrere Kühlrippenmodule, welche voneinander beabstandet an dem Gehäuse angeordnet und einzeln mit dem Gehäuse verbunden sind. Dies ermöglicht eine verbesserte Herstellbarkeit der Kühlrippenanordnung, eine variable Anordnbarkeit der Kühlrippenmodule am Aussenleiter und somit ein flexibles und veränderliches Design der Kühlrippenanordnung sowie eine flexible Anpassung der Kühlrippenanordnung mittels Gleichteilen an verschiedene Schaltertypen. Besonders vorteilhaft sind die Kühlrippenmodule in das Gehäuse eingeschweisst. Dadurch wird ein guter Wärmekontakt zwischen Kühlrippenmodulen und Gehäuse erreicht und eine gute Herstellbarkeit. Zudem wird das Gewicht des Aussenleiters gering gehalten, wenn Teile des Gehäuses durch eingeschweisste Kühlrippenmodule ersetzt werden.

Vorteilhaft umfasst die Kühlrippenanordnung mehrere gleichartige einstückig ausgebildete Kühlrippenelemente, welche parallel nebeneinander, vorteilhaft parallel zueiandner, angeordnet und miteinander verbunden sind. Auch dadurch wird eine flexible Anpassbarkeit an verschiedene Kühlrippenanordnungs-Designs und Schaltertypen und eine verbesserte Herstellbarkeit erreicht, insbesondere wenn die Kühlrippenelemente durch Strangpressen hergestellt werden. Besonders vorteilhaft umfasst die Kühlrippenanordnung mehrere aus jeweils mehreren solchen Kühlrippenelementen bestehenden Kühlrippenmodule, welche voneinander beabstandet an dem Gehäuse angeordnet und einzeln mit dem Gehäuse verbunden sind. Dies vereinigt die Vorteile der Kühlrippenmodule mit denen der Kühlrippenelemente und ergibt einen optimal modularisierten, gut herstellbaren und flexibel anpassbaren Aufbau der Kühlrippenanordnung.

Wenn zusätzlich noch die Kühlrippenelemente zueinander parallele und mit einem Abstand D gleichbeabstandete Kühlrippen aufweisen und benachbarte derartige Kühlrippen zweier benachbarter Kühlrippenelemente voneinander einen Abstand aufweisen, der grösser ist als der Abstand D, ist dies von weiterem Vorteil. Denn dadurch wird die Vereinigung oder Verbindung, beispielsweise Verschweissung, zweier benachbarter Kühlrippenelemente vereinfacht, weil die Zugänglichkeit der Verbindungsstelle (Schweissnaht) verbessert ist. Die Herstellbarkeit ist deutlich verbessert.

Wenn die Kühlrippenelemente sowohl ausserhalb des Gehäuses als auch innerhalb des Gehäuses Kühlrippen aufweisen, weisen vorteilhaft nur die innerhalb des Gehäuses angeordneten inneren Kühlrippen oder nur die ausserhalb des Gehäuses angeordneten äussere Kühlrippen zweier benachbarter Kühlrippenelemente voneinander einen Abstand auf, der grösser ist als der Abstand D. Bei verbesserter Herstellbarkeit wird eine sehr gute Kühlwirkung erzielt.

In einer besonders bevorzugten Ausführungsform des Erfindungsgegenstandes weist der Hochleistungsschalter mindestens zwei Schalterpole auf, welche nebeneinander angeordnet sind und deren Stromflussrichtungen zueinander parallel verlaufend sind, wobei die Aussenleiter der Schalterpole leitend miteinander verbunden sind, wobei mindestens einer der Schalterpole einen oberhalb des Innenleiters angeordneten Deckel mit einer dem benachbarten Schalterpol zugewandten Schräge aufweist, und wobei an der Schräge Kühlrippen der Kühlrippenanordnung angeordnet sind. Dadurch wird eine sehr effektive Kühlung mittels der Kühlrippenanordnung erreicht. Noch nicht oder nur wenig erwärmte Luft, welche zwischen den benachbarten Schalterpolen aufsteigt, passiert auf diese Weise die an der Schräge angeordneten Kühlrippen und sorgt so für eine deutlich verbesserte Kühlwirkung durch Konvektion. Wärmestrahlung kann trotzdem effizient abgegeben werden. Es entsteht also eine verbesserte Kühlung durch die zwischen benachbarten Schalterpolen entstehende Luftströmung, während Kühlung durch Abstrahlung von Wärme auch noch effizient stattfindet. Bei an zueinander parallelen Teilen benachbarter Schalterpole 2 angebrachten Kühlrippen wäre die Abstrahlung von Wärme stark eingeschränkt, beispielsweise wenn die Kühlrippen an den Seitenteilen 7 angebracht wären.

Besonders effektiv ist diese Kühlung, wenn jeweils zwei benachbarte Schalterpole je einen oberhalb des jeweilgen Innenleiters angeordneten Deckel mit einer dem jeweils benachbarten Schalterpol zugewandten und mit Kühlrippen der Kühlrippenanordnung versehene Schräge aufweisen. In diesem vorteilhaft symmetrischen Aufbau profitieren beide Schalterpole von der aktiven Kühlung durch die zwischen den Schalterpolen entstehende Luftströmung.

Weitere bevorzugte Ausführungsformen und Vorteile gehen aus den abhängigen Patentansprüchen und den Figuren hervor.

### Kurze Beschreibung der Zeichnungen

Im folgenden wird der Erfindungsgegenstand anhand von bevorzugten Ausführungsbeispielen, welche in den beiliegenden Zeichnungen dargestellt sind, näher erläutert. Es zeigen schematisch:
- Fig. 1: eine Aufsicht auf einen senkrechten Schnitt durch einen erfindungsgemässen Hochleistungsschalter mit drei Schalterpolen mit Deckeln mit Schrägen mit inneren und äusseren Kühlrippen;
- Fig. 2: eine Aufsicht auf den Hochleistungsschalter gemäss Fig. 1;
- Fig. 3: einen Schnitt durch ein Kühlrippenmodul aus drei Kühlrippenelementen;
- Fig. 4: eine Aufsicht auf das Kühlrippenmodul gemäss Fig. 3.

Die in den Zeichnungen verwendeten Bezugszeichen und deren Bedeutung sind in der Bezugszeichenliste zusammengefasst aufgelistet. Grundsätzlich sind in den Figuren gleiche oder gleichwirkende Teile mit gleichen Bezugszeichen versehen. Die beschriebenen Ausführungsbeispiele stehen beispielhaft für den Erfindungsgegenstand und haben keine beschränkende Wirkung.

### Wege zur Ausführung der Erfindung

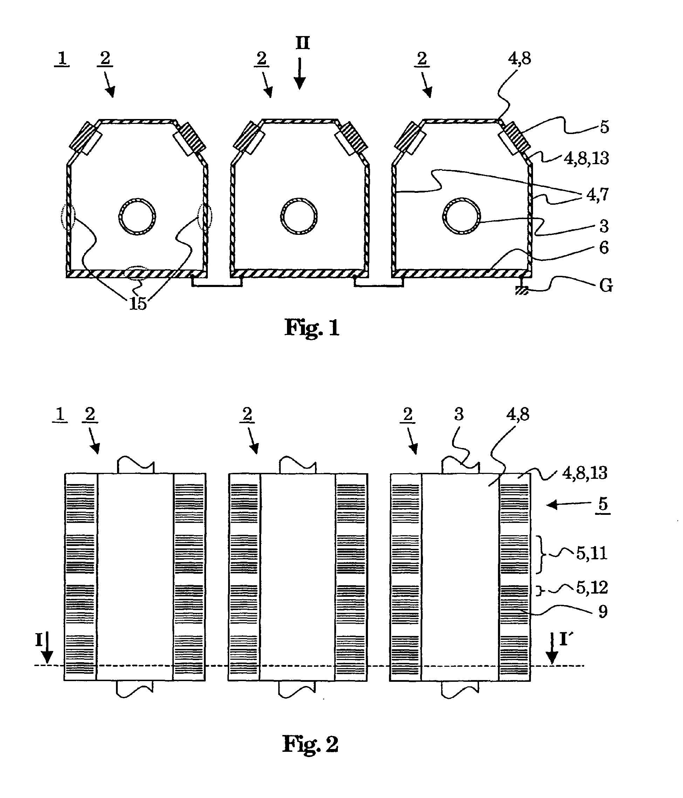

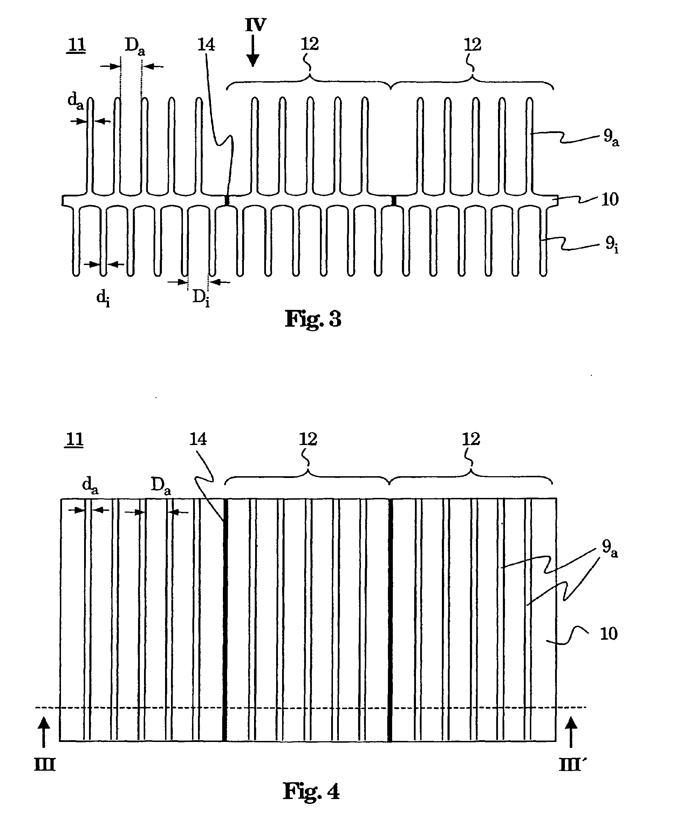

Fig. 1 zeigt schematisch eine Aufsicht auf einen senkrechten Schnitt durch einen erfindungsgemässen Hochleistungsschalter 1. Der als Generatorschalter 1 für Ströme zwischen etwa 7.5 kA und 18 kA, insbesondere ≥ 9.5 kA ausgebildete Hochleistungsschalter 1 weist drei gleichartig ausgebildete Schalterpole 2 auf. Die Schalterpole 2 weisen jeweils einen rohrförmigen Innenleiter 3 und einen den Innenleiter 3 als Gehäuse 4 umgebenden Aussenleiter 4 auf. Der Innenleiter 3 wird oft auch als Aktivteil 3 und der Aussenleiter 4 als Passivteil 4 oder Kapselung 4 bezeichnet. Selbstverständlich beinhaltet der Hochleistungsschalter 1 auch Antriebe, eine Schaltstrecke und weitere Bestandteile, die der Fachmann der Hochspannungs- und Hochstrom-Schaltertechnik in einem Hochleistungsschalter 1 erwartet, die aber in Fig. 1 nicht dargestellt sind. Das Gehäuse 4 beinhaltet einen Bodenteil 6, zwei Seitenteile 7 und einen Deckel 8 (und je einen nicht dagestellten oder bezeichneten Vorder- und Hinterteil). Der Bodenteil 6 und die Seitenteile 7 (und Vorder- und Hinterteil) können zusammen einstückig ausgebildet sein. Der Deckel 8 weist zwei Schrägen 13 auf und ist vorteilhaft mit den Seitenteilen 7 (und dem Vorder- und dem Hinterteil) des Gehäuses verschraubt. An diesen Schrägen 13 ist eine Kühlrippenanordnung 5 angeordnet. Die Kühlrippenanordnung 5 weist innere Kühlrippen auf, die sich in das Innere des Gehäuses 4 erstrecken, und äussere Kühlrippen, die ausserhalb des Gehäuses 4 angeordnet sind, wobei die Kühlrippen senkrecht zur Längsachse des Innenleiters 3 ausgerichtet sind, und wobei die inneren Kühlrippen gegenüber den äusseren Kühlrippen versetzt sind. In Figs. 3 und 4 ist die Kühlrippenanordnung in grösserem Detail dargestellt.

Unten in Fig. 1 ist dargestellt, dass die Aussenleiter 4 elektrisch leitend miteinander und mit Erdpotential G verbunden sind. Im geschlossenen Zustand der Schalterpole 2 führen die Innenleiter 3 den Strom einer elektrischen Phase. Die Aussenleiter führen dann einen Rückstrom, der dem Innenleiter-Strom entgegengesetzt ist und von der gleichen Grössenordnung ist. Vorteilhaft ist der Innenleiter mit einer Kühlvorrichtung, beispielsweise mit Kühlrippen versehen. Dies ist in Fig. 1 nicht dargestellt.

Aufgrund ohmscher Verluste erwärmt sich der Innenleiter bei Stromfluss stark. Wie weiter oben dargestellt, verbessert die Kühlrippenanordnung 5 indirekt die Kühlung des Innenleiters 3, welcher per se deutlich heisser ist als der Aussenleiter 4. Die Kühlrippenanordnung 5 ist nicht an solchen Regionen 15 angeordnet, die eine maximale Stromdichte des Aussenleiters 4 aufweisen. Diese Regionen 15 sind dort, wo der Abstand zwischen Innenleiter 3 und Aussenleiter 4 minimal ist. In Fig. 1 sind diese Regionen 15 gestrichelt umkringelt. Vorteilhaft sind die Kühlrippen der Kühlrippenanordnung 5 an Teilen des Aussenleiters 4 angebracht, an denen die Stromdichte des Rückstroms mindestens eine Grössenordnung geringer ist als die maximale Stromdichte des Aussenleiters 4, vorteilhaft an Teilen, mit vernachlässigbarem Rückstrom. Dadurch wird erreicht, dass der Widerstand des Aussenleiters 4 nicht oder nur in vernachlässigbarem Masse vergrössert wird.

Fig. 2 zeigt schematisch eine Aufsicht auf den Hochleistungsschalter 1 gemäss Fig. 1 in der in Fig. 1 mit II bezeichneten Richtung. In Fig. 2 ist mit I,I' der Schnitt und die Ansicht bezeichnet, die in Fig. 1 dargestellt ist.

Die Aufsicht auf die Deckel 8 der Schalterpole 2 in Fig. 2 zeigt die Kühlrippenanordnung 5 in mehr Detail. Pro Schräge 13 der Deckel 8 weist die Kühlrippenanordnung 5 mehrere, genauer vier, gern gleichartige Kühlrippenmodule 11 auf. Diese sind voneinander beabstandet und einzeln an dem Deckel angebracht. Vorteilhaft sind die Kühlrippenmodule 11 eingeschweisst in die Deckel 8. Das heisst, jeweils ein Teil eines Deckels 8 wird herausgenommen und durch ein Kühlrippenmodul 11 ersetzt.

Die Kühlrippenmodule 11 selbst bestehen vorteilhaft, wie dargestellt, aus mehreren, genauer drei, vorteilhaft gleichartigen Kühlrippenelementen 12, die miteinander verbunden sind, insbesondere zusammengeschweisst sind. Jedes Kühlrippenelement 12 weist mehrere Kühlrippen 9 auf. In Fig. 2 sichtbar sind die äusseren Kühlrippen 9. Die Kühlrippenelemente 12 und die Kühlrippen 9 sind in den Figs. 3 und 4 in mehr Detail dargestellt.

Fig. 3 zeigt schematisch einen Schnitt durch ein Kühlrippenmodul 11 aus mehreren, genauer drei, gleichartigen Kühlrippenelementen 12, die an Schweissnähten 14 zusammengeschweisst sind. Jedes Kühlrippenelement 12 besteht aus einer Basisplatte 10 sowie inneren Kühlrippen 9ᵢ und äusseren Kühlrippen 9ₐ. Ein solches Kühlrippenmodul 11 kann an seinen Rändern in einen Deckel eines Aussenleiters eingeschweisst werden. Andere Möglichkeiten des Verbindens des Kühlrippenmoduls 11 mit dem Aussenleiter sind beispielsweise löten, clinchen oder kleben.

Die inneren beziehungsweise äusseren Kühlrippen 9ᵢ,9ₐ weisen Dicken di beziehungsweise dₐ auf, die in diesem Beispiel gleich gross gewählt sind. Benachbarte Kühlrippen 9ᵢ,9ₐ weisen voneinander Abstände Dᵢ beziehungsweise Dₐ auf. Die Abstände sind in diesem Beispiel gleich gross gewählt. Abstände Dᵢ,Dₐ betragen typischerweise zwischen 9 mm und 16 mm (Mitte-Mitte-gemessene Abstände sind entsprechend grösser). Dicken dᵢ,dₐ betragen typischerweise zwischen 1 mm und 5 mm.

Die Basisplatte ist vorteilhaft von der gleichen Dicke wie die Kühlrippen 9, da dadurch Verzüge der Kühlrippenelemente 12 beim Abkühlen nach der Formung der Kühlrippenelemente 12 minimiert werdenEine weiter verbesserte Herstellbarkeit ergibt sind, wenn die inneren Kühlrippen 9ᵢ, und die äusseren Kühlrippen 9ₐ gegeneinander versetzt angeordnet sind, insbesondere wenn die einzelnen Kühlrippenelemente 12 mittels Strangpressens hergestellt sind. Andere Methoden zur Herstellung der Kühlrippenelemente 12 sind beispielsweise Laserschweissen, Giessen (insbesondere Sandguss) und Löten. Mit Vorteil (Gewicht und thermische Leitfähigkeit) sind die Kühlrippenelemente 12 im wesentlichen aus Aluminium hergestellt.

Zum Zwecke einer vereinfachten Herstellbarkeit der Kühlrippenmodule 11 aus den Kühlrippenelementen 12 weisen die benachbarten Kühlrippen 9 zweier benachbarter Kühlrippenelemente 12 einen grösseren Abstand als den Abstand D auf. Auf diese Weise ist die Verbindungsstelle (Schweissnaht) besser zugänglich. Um elektrische Feldspitzen im Inneren des Aussenleiters zu vermeiden, sind zum einen die inneren Kühlrippen 9ᵢ kürzer als die äusseren Kühlrippen 9ₐ. Zum anderen sind die inneren Kühlrippen 9ᵢ an ihrem der Basisplatte 10 abgewandten Ende abgerundet. Auf diese Weise wird sowohl eine gute Kühlwirkung als auch eine gute Vermeidung von hohen Feldstärken (Feldspitzen) innerhalb des Gehäuses erreicht.

Fig. 4 zeigt schematisch eine Aufsicht auf das Kühlrippenmodul 11 gemäss Fig. 3 entlang der in Fig. 3 mit IV bezeichneten Richtung, so dass nur die äusseren Kühlrippen 9ₐ und die Basisplatte 10 zu sehen sind. Der in Fig. 3 dargestellte Schnitt ist in Fig. 4 mit III,III' bezeichnet.

In einer nicht dargestellten vorteilhaften Ausführungsform mit inneren Kühlrippen ist zwischen diesen Kühlrippen und dem Innenleiter eine mit den Kühlrippen leitend verbundene Metallplatte angeordnet. Eine solche Metallplatte erzeugt eine sehr gute Abschirmung der dem Innenleiter zugewandten Enden der Kühlrippen, so dass durch die Kühlrippenanordnung keine hohe Feldstärken im Inneren des Gehäuses auftreten. Bevorzugt ist die Metallplatte mit mindestens einer, vorteilhaft mehreren Kühlrippen an dem dem Innenleiter zugewandten Ende der Kühlrippe oder Kühlrippen angebracht. Besonders bevorzugt ist die Metallplatte mit den dem Innenleiter zugewandten Ende aller Kühlrippen eines Kühlrippenelementes und/oder allen Kühlrippen eines Kühlrippenmoduls verbunden. Vorteilhaft kann die Metallplatte parallel zu einer Basisplatte der Kühlrippenanordnung (und/oder der Basisplatte eines Kühlrippenmoduls und/oder der Basisplatte eines Kühlrippenelementes) ausgerichtet sein.

### Bezugszeichenliste

- 1: Hochleistungsschalter
- 2: Schalterpol
- 3: Innenleiter, Aktivteil
- 4: Aussenleiter, Gehäuse, Kapselung, Passivteil
- 5: Kühlrippenanordnung
- 6: Bodenteil
- 7: Seitenteil
- 8: Deckel
- 9,9ᵢ,9ₐ: Kühlrippen
- 10: Basisplatte
- 11: Kühlrippenmodul
- 12: Kühlrippenelement
- 13: Schräge
- 14: Schweissnaht
- 15: Regionen maximaler Stromdichte des Aussenleiters

- a: Index für "innen" (innerhalb des Gehäuses)
- i: Index für "aussen" (ausserhalb des Gehäuses)
- d: Dicke einer Kühlrippe
- D: Abstand zwischen benachbarten Kühlrippen
- G: Erdpotential

## Patentansprüche

1. Hochleistungsschalter (1) mit mindestens einem Schalterpol (2) zum Führen und Schalten eines im geschlossenen Schalterzustand in einer Stromflussrichtung fliessenden elektrischen Stromes, wobei der mindestens eine Schalterpol (2) einen Innenleiter (3) entlang einer Längsachse beinhaltet, welcher den Strom führt, und einen mit Erdpotential (G) verbundenen Aussenleiter (4) beinhaltet, welcher einen dem Strom entgegengerichteten Rückstrom führt, wobei der Aussenleiter (4) als ein den Innenleiter (3) umgebendes Gehäuse (4) ausgebildet ist und an dem Aussenleiter (4) eine Kühlrippen (9) beinhaltende Kühtrippenanordnung (5) vorhanden ist, **dadurch gekennzeichnet, dass** die Kühlrippen (9) beinhaltende Kühlrippenanordnung (5) radial beabstandet zum innenleiter (3) angeordnet ist.

2. Hochleistungsschalter (1) gemäss Anspruch 1, **dadurch gekennzeichnet, dass** die Kühlrippenanordnung (5) zumindest teilweise an einem solchen Teil des Gehäuses (4) angeordnet ist, der verschieden ist von dem von dem Innenleiter (3) minimal beabstandeten Teil (15) des Gehäuses (4), insbesondere dass das Gehäuse (4) einen Bodenteil (6), zwei Seitenteile (7) und einen Deckel (8) aufweist, wobei zumindest ein Teil des Deckels (8) von dem Innenleiter (3) weiter beabstandet ist als der Bodenteil (6) und die Seitenteile (7), wobei die Kühlrippenanordnung (5) an solchen Teilen des Deckels (8) angeordnet ist.

3. Hochleistungsschalter (1) gemäss einem der vorangegangenen Ansprüche, **dadurch gekennzeichnet, dass** die Kühlrippenanordnung (5) sowohl ausserhalb des Gehäuses (4) als auch innerhalb des Gehäuses (4) Kühlrippen (9) aufweist.

4. Hochleistungsschalter (1) gemäss Anspruch 3, **dadurch gekennzeichnet, dass** die Kühlrippenanordnung (5) eine mit dem Gehäuse (4) verbundene Basisplatte (10) aufweist, welche an einer, dem Inneren des Gehäuses (4) zugewandten Seite innere Kühlrippen (9ᵢ) aufweist und an einer dem Inneren des Gehäuses (4) abgewandten Seite äussere Kühlrippen (9ₐ) aufweist, insbesondere wobei die Kühlrippen (9) senkrecht zu der Basisplatte (10) erstreckt sind, und insbesondere wobei die Basisplatte (10) an ihren Rändern mit dem Gehäuse (4) verbunden ist.

5. Hochleistungsschalter (1) gemäss einem der Ansprüche 3 oder 4, **dadurch gekennzeichnet, dass** die inneren Kühlrippen (9ᵢ) parallel zu den äusseren Kühlrippen (9ₐ) ausgerichtet sind, und dass die inneren Kühlrippen (9ᵢ) gegenüber den äusseren Kühlrippen (9ₐ) versetzt angeordnet sind.

6. Hochleistungsschalter (1) gemäss einem der Ansprüche 3 bis 5, **dadurch gekennzeichnet, dass** die inneren Kühlrippen (9ᵢ) weniger weit ins Innere des Gehäuses (4) erstreckt sind als die die äusseren Kühlrippen (9ₐ) von dem Gehäuse (4) weg erstreckt sind.

7. Hochleistungsschalter (1) gemäss einem der vorangegangenen Ansprüche, **dadurch gekennzeichnet, dass** die Kühlrippen (9) flächig ausgebildet und senkrecht zur Stromflussrichtung ausgerichtet sind.

8. Hochleistungsschalter (1) gemäss einem der vorangegangenen Ansprüche, **dadurch gekennzeichnet, dass** die Kühlrippenanordnung (5) mehrere Kühlrippenmodule (11) umfasst, welche voneinander beabstandet an dem Gehäuse (4) angeordnet und einzeln mit dem Gehäuse verbunden sind, insbesondere in das Gehäuse (4) eingeschweisst sind.

9. Hochleistungsschalter (1) gemäss einem der vorangegangenen Ansprüche, **dadurch gekennzeichnet, dass** die Kühlrippenanordnung (5) mehrere gleichartige einstückig ausgebildete Kühlrippenelemente (12) umfasst, welche parallel nebeneinander angeordnet und miteinander verbunden sind, insbesondere wobei die Kühlrippenanordnung (5) mehrere aus jeweils mehreren solchen Kühlrippenelementen (12) bestehenden Kühlrippenmodule (11) umfasst, welche voneinander beabstandet an dem Gehäuse (4) angeordnet und einzeln mit dem Gehäuse verbunden sind.

10. Hochleistungsschalter (1) gemäss Anspruch 9, **dadurch gekennzeichnet, dass** die Kühlrippenelemente (12) zueinander parallele und mit einem Abstand D gleichbeabstandete Kühlrippen (9) aufweisen, und dass benachbarte derartige Kühlrippen (9) zweier benachbarter Kühlrippenelemente (12) voneinander einen Abstand aufweisen, der grösser ist als der Abstand D, insbesondere dass die Kühlrippenelemente (12) sowohl ausserhalb des Gehäuses (4) als auch innerhalb des Gehäuses (4) Kühlrippen (9) aufweisen, und dass die innerhalb des Gehäuses (4) angeordneten inneren Kühlrippen (9ᵢ) und/oder die ausserhalb des Gehäuses (4) angeordneten äussere Kühlrippen (9ₐ) zweier benachbarter Kühlrippenelemente (12) voneinander einen Abstand aufweisen, der grösser ist als der Abstand D.

11. Hochleistungsschalter (1) gemäss einem der vorangegangenen Ansprüche, **dadurch gekennzeichnet, dass** der Hochleistungsschalter (1) mindestens zwei Schalterpole (2) aufweist, welche nebeneinander angeordnet sind und deren Stromflussrichtungen zueinander parallel verlaufend sind, wobei die Aussenleiter (4) der Schalterpole (2) leitend miteinander verbunden sind, wobei mindestens einer der Schalterpole (2) einen oberhalb des Innenleiters (3) angeordneten Deckel (8) mit einer dem benachbarten Schalterpol (2) zugewandten Schräge (13) aufweist, und wobei an der Schräge (13) Kühlrippen (9) der Kühlrippenanordnung (5) angeordnet sind, insbesondere wobei jeweils zwei benachbarte Schalterpole (2) je einen oberhalb des jeweiligen Innenleiters (3) angeordneten Deckel (8) mit einer dem jeweils benachbarten Schalterpol (2) zugewandten und mit Kühlrippen (9) der Kühlrippenanordnung (5) versehene Schräge (13) aufweisen.

## Claims

1. High-power switch (1) with at least one switch pole (2) for guiding and switching an electric current which flows in one current flow direction when the switch is in the closed state, with the at least one switch pole (2) containing, along a longitudinal axis an inner conductor (3) which carries the current and containing an outer conductor (4) which is connected to earth potential (G) and carries a return current in the opposite direction to the current, with the outer conductor (4) being in the form of a housing (4) which surrounds the inner conductor (3) and a cooling rib arrangement (5) which contains cooling ribs (9) being provided on the outer conductor (4), **characterized in that** the coding rib arrangement (5) which contains cooling ribs (9) is arranged at a radial distance from the inner conductor (3).

2. High-power switch (1) according to Claim 1, **characterized in that** the cooling rib arrangement (5) is at least partially arranged on such a part of the housing (4) which is different from that part (15) of the housing (4) which is at a minimum distance from the inner conductor (3), in particular **in that** the housing (4) has a base part (6), two side parts (7) and a cover (8), with at least a part of the cover (8) being further away from the inner conductor (3) than the base part (6) and the side parts (7), and with the cooling rib arrangement (5) being arranged on those parts of the cover (8).

3. High-power switch (1) according to one of the preceding claims, **characterized in that** the cooling rib arrangement (5) has cooling ribs (9) both outside the housing (4) and inside the housing (4).

4. High-power switch (1) according to Claim 3, **characterized in that** the cooling rib arrangement (5) has a base plate (10), which is connected to the housing (4), has inner cooling ribs (9ᵢ) on a side which faces the interior of the housing (4), and has outer cooling ribs (9ₐ) on a side which faces away from the interior of the housing (4), in particular with the cooling ribs (9) extending at right angles to the base plate (10), and in particular with the base plate (10) being connected at its edges to the housing (4).

5. High-power switch (1) according to one of Claims 3 or 4, **characterized in that** the inner cooling ribs (9ᵢ) are aligned parallel to the outer cooling ribs (9ₐ), and **in that** the inner cooling ribs (9ᵢ) are arranged offset with respect to the outer cooling ribs (9ₐ).

6. High-power switch (1) according to one of Claims 3 to 5, **characterized in that** the inner cooling ribs (9ᵢ) extend to a lesser extent into the interior of the housing (4) than the outer cooling ribs (9ₐ) extend away from the housing (4).

7. High-power switch (1) according to one of the preceding claims, **characterized in that** the cooling ribs (9) are flat and are aligned at right angles to the current flow direction.

8. High-power switch (1) according to one of the preceding claims, **characterized in that** the cooling rib arrangement (5) has two or more cooling rib modules (11), which are arranged at a distance from one another on the housing (4) and are individually connected to the housing, in particular being welded into the housing (4).

9. High-power switch (1) according to one of the preceding claims, **characterized in that** the cooling rib arrangement (5) has two or more identical integral cooling rib elements (12), which are arranged parallel alongside one another and are connected to one another, in particular with the cooling rib arrangement (5) being formed from two or more cooling rib modules (11) which each comprise two or more cooling rib elements (12) such as these, are arranged at a distance from one another on the housing (4) and are individually connected to the housing.

10. High-power switch (1) according to Claim 9, **characterized in that** the cooling rib elements (12) have cooling ribs (9) which are parallel to one another and are separated by an equal distance D, and **in that** adjacent cooling ribs (9) such as these of two adjacent cooling rib elements (12) are at a distance from one another which is greater than the distance D, in particular **in that** the cooling rib elements (12) have cooling ribs (9) both outside the housing (4) and inside the housing (4), and **in that** the inner cooling ribs (9ᵢ) which are arranged inside the housing (4) and/or the outer cooling ribs (9ₐ) which are arranged outside the housing (4) of two adjacent cooling rib elements (12) are at a distance from one another which is greater than the distance D.

11. High-power switch (1) according to one of the preceding claims, **characterized in that** the high-power switch (1) has at least two switch poles (2) which are arranged alongside one another and whose current flow directions run parallel to one another, with the outer conductors (4) of the switch poles (2) being conductively connected to one another, with at least one of the switch poles (2) having a cover (8) which is arranged above the inner conductor (3) and has an incline (13) facing the adjacent switch pole (2), and with cooling ribs (9) of the cooling rib arrangement (5) being arranged on the incline (13), in particular with in each case two adjacent switch poles (2), each having a cover (8) which is arranged above the respective inner conductor (3) with an incline (13) which faces the respectively adjacent switch pole (2) and is provided with cooling ribs (9) in the cooling rib arrangement (5).

## Revendications

1. Commutateur de grande puissance (1) comprenant au moins un pôle de commutation (2) pour conduire et commuter un courant électrique qui circule dans un sens de circulation du courant lorsque le commutateur est en position fermée, l'au moins un pôle de commutation (2) comprenant un conducteur interne (3) le long d'un axe longitudinal, lequel conduit le courant, et comprend un conducteur externe (4) relié à un potentiel de terre (G), lequel conduit un courant de retour en sens inverse du courant, le conducteur externe (4) étant réalisé sous la forme d'un boîtier (4) qui entoure le conducteur interne (3) et un arrangement d'ailettes de refroidissement (5) comprenant des ailettes de refroidissement (9) étant disposé sur le conducteur externe (4), **caractérisé en ce que** l'arrangement d'ailettes de refroidissement (5) comprenant des ailettes de refroidissement (9) est disposé avec un écart radial par rapport au conducteur interne (3).

2. Commutateur de grande puissance (1) selon la revendication 1, **caractérisé en ce que** l'arrangement d'ailettes de refroidissement (5) est disposé au moins partiellement sur une partie du boîtier (4) qui est différente de la partie (15) du boîtier (4) présentant l'écart minimal par rapport au conducteur interne (3), notamment **en ce que** le boîtier (4) présente une partie fond (6), deux parties latérales (7) et un couvercle (8), au moins une partie du couvercle (8) étant plus espacée du conducteur interne (3) que la partie fond (6) et des parties latérales (7), l'arrangement d'ailettes de refroidissement (5) étant disposé sur de telles parties du couvercle (8).

3. Commutateur de grande puissance (1) selon l'une des revendications précédentes, **caractérisé en ce que** l'arrangement d'ailettes de refroidissement (5) présente des ailettes de refroidissement (9) à la fois à l'extérieur du boîtier (4) et à l'intérieur du boîtier (4).

4. Commutateur de grande puissance (1) selon la revendication 3, **caractérisé en ce que** l'arrangement d'ailettes de refroidissement (5) présente une plaque de base (10) reliée au boîtier (4), laquelle présente des ailettes de refroidissement intérieures (9ᵢ) sur un côté faisant face à l'intérieur du boîtier (4) et des ailettes de refroidissement extérieures (9ₐ) sur un côté à l'opposé de l'intérieur du boîtier (4), les ailettes de refroidissement (9) s'étendant notamment perpendiculairement à la plaque de base (10) et la plaque de base (10) étant notamment reliée avec le boîtier (4) au niveau de ses bords.

5. Commutateur de grande puissance (1) selon l'une des revendications 3 ou 4, **caractérisé en ce que** les ailettes de refroidissement intérieures (9ᵢ) sont orientées parallèlement aux ailettes de refroidissement extérieures (9ₐ) et que les ailettes de refroidissement intérieures (9ᵢ) sont disposées de manière décalée par rapport aux ailettes de refroidissement extérieures (9ₐ).

6. Commutateur de grande puissance (1) selon l'une des revendications 3 à 5, **caractérisé en ce que** les ailettes de refroidissement intérieures (9ᵢ) s'étendent moins loin à l'intérieur du boîtier que les ailettes de refroidissement extérieures (9ₐ) s'étendant en s'éloignant du boîtier (4).

7. Commutateur de grande puissance (1) selon l'une des revendications précédentes, **caractérisé en ce que** les ailettes de refroidissement (9) sont de forme plate et sont dirigées perpendiculairement au sens de circulation du courant.

8. Commutateur de grande puissance (1) selon l'une des revendications précédentes, **caractérisé en ce que** l'arrangement d'ailettes de refroidissement (5) comprend plusieurs modules d'ailettes de refroidissement (11) qui sont disposés sur le boîtier (4) espacés l'un de l'autre et sont reliés individuellement avec le boîtier, notamment en étant soudés dans le boîtier (4).

9. Commutateur de grande puissance (1) selon l'une des revendications précédentes, **caractérisé en ce que** l'arrangement d'ailettes de refroidissement (5) comprend plusieurs éléments à ailettes de refroidissement (12) identiques monoblocs qui sont disposés parallèlement les uns aux autres et qui sont reliés entre eux, l'arrangement d'ailettes de refroidissement (5) comprenant notamment plusieurs modules d'ailettes de refroidissement (11) composés à chaque fois de plusieurs éléments à ailettes de refroidissement (12) de ce type, lesquels sont disposés sur le boîtier (4) en étant espacés les uns des autres et reliés individuellement avec le boîtier.

10. Commutateur de grande puissance (1) selon la revendication 9, **caractérisé en ce que** les éléments à ailettes de refroidissement (12) présentent des ailettes de refroidissement (9) parallèles les unes aux autres et équidistantes d'un écart D, et que les ailettes de refroidissement (9) voisines de ce type de deux éléments à ailettes de refroidissement (12) voisins présentent entre elles un écart qui est supérieur à l'écart D, notamment **en ce que** les éléments à ailettes de refroidissement (12) présentent des ailettes de refroidissement (9) à la fois à l'extérieur du boîtier (4) et à l'intérieur du boîtier (4) et **en ce que** les ailettes de refroidissement intérieures (9ᵢ) disposées à l'intérieur du boîtier (4) et/ou les ailettes de refroidissement extérieures (9ₐ) disposées à l'extérieur du boîtier (4) de deux éléments à ailettes de refroidissement (12) voisins présentent entre elles un écart qui est supérieur à l'écart D.

11. Commutateur de grande puissance (1) selon l'une des revendications précédentes, **caractérisé en ce que** le commutateur de grande puissance (1) présente au moins deux pôles de commutation (2) qui sont disposés l'un à côté de l'autre et dont les sens de circulation du courant sont parallèles l'un à l'autre, les conducteurs externes (4) des pôles de commutation (2) étant reliés électriquement entre eux, au moins l'un des pôles de commutation (2) présentant un couvercle (8) disposé au-dessus du conducteur interne (3) avec un biseau (13) faisant face au pôle de commutation (2) voisin, et les ailettes de refroidissement (9) de l'arrangement d'ailettes de refroidissement (5) étant disposées sur le biseau, deux pôles de commutation (2) voisins présentant notamment à chaque fois chacun un couvercle (8) disposé au-dessus du conducteur interne (3) correspondant avec un biseau (13) faisant face au pôle de commutation (2) voisin correspondant et muni des ailettes de refroidissement (9) de l'arrangement d'ailettes de refroidissement (5).
